# EUROPÄISCHE PATENTSCHRIFT

(11) **EP 0 589 398 B1**
(45) Veröffentlichungstag und Bekanntmachung des Hinweises auf die Patenterteilung: **11.12.1996**
(21) Anmeldenummer: 93115121.1
(22) Anmeldetag: 20.09.1993
(51) Int. Cl.: F16B 25/00

(54) **Selbstfurchende Schraube**
Self-tapping screw
Vis auto-taraudeuse

(30) Priorität: 21.09.1992 DE 4231547
(43) Veröffentlichungstag der Anmeldung: 30.03.1994
(73) Patentinhaber: HANS SCHRIEVER GmbH & Co., D-58515 Lüdenscheid (DE)
(72) Erfinder: Güven, Ali Hikmet, D-57319 Bad Berleburg (DE)
(74) Vertreter: Körber, Wolfhart, Dr. rer.nat.

(56) Entgegenhaltungen:
- EP-A- 0 104 552
- DD-A- 62 683
- FR-A- 2 500 090
- GB-A- 508 867

## Beschreibung

Die Erfindung betrifft eine selbstfurchende Schraube, insbesondere für Duroplaste, Druckgußmaterialien und dgl., nach dem Oberbegriff des Anspruches 1.

Aus der EP 0 104 552 A1 ist eine derartige Schraube bekannt, die aufgrund der asymmetrischen Ausbildung ihrer Gewindeflanken und des kleinen FlankenWinkels ein hohes Anzugs- und Überdrehmoment bei gleichzeitig geringem Eindrehmoment aufweist. Die Kernabschnitte zwischen den Gewindegängen dieser bekannten Schraube bestehen aus jeweils zwei identischen kegelstumpfförmigen Bereichen, die mit ihren Grundflächen kleineren Durchmessers, der dem Schrauben-Kerndurchmesser entspricht, aneinanderstoßen und auf diese Weise eine im Längsschnitt V-förmige Vertiefung mit einem eingeschlossenen Winkel von etwa 150° bilden, in die Materialspäne einfließen und dort Aufnahme finden, die von der Schraube beim Eindrehen in Duroplaste, Druckgußmaterialien oder Materialien mit ähnlichen Zerspanungseigenschaften abgespant und verdrängt werden. Die dabei entstehenden Späne sind Bruchspäne, die je nach Materialeigenschaften zerbröckelt werden oder in unregelmäßigen Bildungen abbrechen. Im letzteren Fall kann nicht ausgeschlossen werden, daß auch größere Spanbildungen auftreten, die die Aufnahmekapazität der V-förmigen Vertiefung übersteigen und sich somit an die Gewindeflanken mit der Folge anlagern, daß die effektive Tragtiefe der Gewindegänge kleiner ist als die theoretische Tragtiefe, d.h. die Differenz zwischen dem Außendurchmesser und dem Kerndurchmesser an der zugehörigen Fußlinie. Entsprechend geringer ist auch die effektive Belastbarkeit der bekannten Schraube im Vergleich zum theoretisch erzielbaren Maximalwert.

Es ist Aufgabe der Erfindung, die Schraube der eingangs genannten Art so weiterzubilden, daß sie höher belastbar ist.

Diese Aufgabe wird durch die kennzeichnenden Merkmale des Anspruches 1 gelöst. Die Kernabschnitte der erfindungsgemäßen Schraube weisen ebenfalls wie diejenigen der bekannten Schraube einen größten und einen kleinsten Durchmesser auf. Letzterer ist jedoch an der Fußlinie der jeweiligen, dem Schraubenkopf abgewandten Gewindeflanke zu finden, so daß die verdrängten Materialspäne sich in deren Bereich ansammeln und auf diese Weise von der jeweils anderen, die Vorspannung der Schraube aufnehmenden Gewindeflanke ferngehalten werden. Die effektive Tragtiefe und damit die effektive Belastbarkeit dieser Gewindeflanke ist also zumindest gleich der theoretischen Tragtiefe bzw. dem theoretisch erzielbaren Maximalwert. Das verdrängte Material fließt längs jedes Kernabschnittes in lediglich eine Richtung bis in den Kernabschnittsbereich kleinsten Durchmessers mit dem Ergebnis eines im Vergleich zum Stand der Technik verringerten Einschraubmomentes der Schraube beim Eindrehen.

Zwar ist aus der GB-A-508 867 eine Schraube mit sich in Richtung des Schraubenkopfes verjüngenden Kernabschnitten bekannt, die jedoch aufgrund symmetrischer Gewindeflanken und größeren Flankenwinkels (whitworth-Gewinde) nicht die für den Einsatzbereich der erfindungsgemäßen Schraube erforderliche Kombination eines hohen Anzugs- und Überdrehmomentes und geringen Einschraubmomentes aufweist und deren Kernabschnitte außerdem einen sich in Richtung Schraubenspitze verjüngenden Verlauf aufweisen können.

Jeder Kernabschnitt kann sich mit diskontinuierlichem, aber auch mit kontinuierlichem, vorzugsweise konischem Verlauf in Richtung Schraubenkopf verjüngen. Eine Verjüngung mit bogenförmigem Verlauf ist jedoch nicht ausgeschlossen.

Vorteilhafterweise liegt der Neigungswinkel zwischen einer Mantellinie jedes Kernabschnitts und der Schraubenlängsachse im Bereich von etwa 5° bis etwa 15°, vorzugsweise bei etwa 10°.

Das Gewinde der erfindungsgemäßen Schraube ist vorzugsweise eingängig, kann jedoch auch mehrgängig ausgebildet sein.

Eine optimale Tragtiefe für beide Gewindeflanken jedes Gewindeganges ergibt sich gemäß einer Weiterbildung der Erfindung, wenn das Verhältnis zwischen dem Gewinde-Außendurchmesser und dem größten Kerndurchmesser größer als 1,15, vorzugsweise etwa 1,3 ist.

Günstig für einen ausgewogenen Kompromiß zwischen geringer Reibung, hoher Selbsthemmung und fester Verankerung der Schraube bei geringer Belastung des Materials ist ein Verhältnis zwischen dem Gewinde-Außendurchmesser und dem axialen Abstand der Gewindegänge von größer als 2,5.

Zur Erzielung hoher axialer und geringer radialer Kraftkomponenten sowie einer geringer Reibung an den Gewindeflanken hat sich ein Flankenwinkel von 30° als besonders günstig erwiesen.

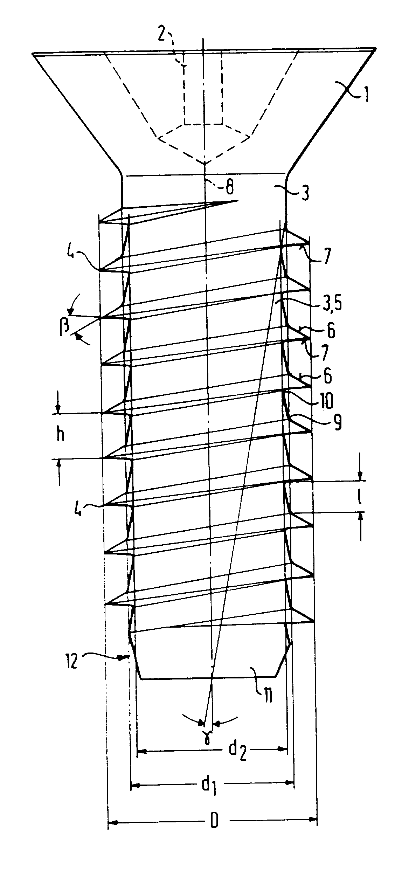

Nachstehend ist die Erfindung anhand eines bevorzugten Ausführungsbeispiels unter Bezugnahme auf den Schrauben-Längsschnitt der beigefügten, einzigen Figur näher beschrieben.

Die in der Figur dargestellte selbstfurchende Schraube ist für Duroplaste, Druckgußmaterialien und Materialien mit ähnlichen Eigenschaften vorgesehen und umfaßt einen Schraubenkopf 1 in Senkkopfausführung mit einem Kreuzschlitz 2 und einen im wesentlichen zylindrischen Schraubenschaft oder Kern 3 mit eingängigem Spitzgewinde, zwischen dessen einzelnen Gewindegängen 4 je ein Kernabschnitt 5 angeordnet ist.

Die jeweils einen Gewindegang 4 definierenden Gewindeflanken 6,7 schließen Leinen Flankenwinkel von 30° ein, wobei die dem Schraubenkopf 1 abgewandten Gewindeflanken 7 entlang einer Senkrechten zur Schraubenlängsachse 8 oder mit einer geringen Neigung von etwa 3° gegenüber dieser Senkrechten verlaufen. Dadurch wird eine hohe axiale und geringe radiale Kraftkomponente sowie eine geringe Reibung an den Gewindeflanken erzielt. Je eine Fußlinie 9,10 kennzeichnet den abgerundeten Übergang zwischen den Gewindeflanken 6,7 jedes Gewindeganges 4 und dem jeweils benachbarten Kernabschnitt 5.

Jeder Kernabschnitt 5 ist konisch ausgebildet und verjüngt sich ausgehend von der Fußlinie 9 der benachbarten Gewindeflanke 6 bis zur Fußlinie 10 der benachbarten Gewindeflanke 7, d.h. in Richtung Schraubenkopf 1, mit einem Neigungswinkel γ gegenüber der Schraubenlängsachse 8. Jeder Kernabschnitt 5 weist somit einen der Fußlinie 9 zugeordneten größten Kerndurchmesser d₁ sowie einen der Fußlinie 10 zugeordneten kleinsten Kerndurchmesser d₂ auf. Dementsprechend ist die Tragtiefe der Gewindeflanke 7, d.h. die Differenz zwischen dem Gewinde-Außendurchmesser D und dem Kerndurchmesser d₂, größer als die bis zum Kerndurchmesser d₁ gemessene Tragtiefe der Gewindeflanke 6.

Im Bereich der Schraubenspitze 11 ist ein sogenannter Anschneidbereich 12 ausgebildet, in welchem die Gewindegänge 4 allmählich bis zum Überstand Null über den Schaft 3 auslaufen. Der Anschneidbereich 12 endet stumpf mit einem Durchmesser, der etwas kleiner als d₂ ist. In diesem Fall ist die Schraube für das Eindrehen in eine Bohrung vorgesehen. Wenn hingegen die Schraube ohne Bohrung in ein Material eingedreht werden soll, ist der Anschneidbereich vorzugsweise mit einer Bohrspitze (nicht gezeigt) ausgebildet. Im Anschneidebereich kann auch eine Schabenut angefräst sein.

Der Gewinde-Außendurchmesser D beträgt im vorliegenden Ausführungsbeispiel 5 mm und steht zum größten Kerndurchmesser d₁ in einem Verhältnis von 1.3, während er sich zum axialen Abstand der Gewindegänge 4, wie 4 : 1 verhält. Der Neigungswinkel γ beträgt 10^{o}. Bei jedem vorgegebenen Außendurchmesser D läßt sich aus dem Flankenwinkel β, dem Neigungswinkel γ und den vorgenannten Verhältnissen D/d₁ sowie D/h ohne weiteres die axiale Länge 1 jedes Kernabschnitts 5 sowie dessen kleinster Kerndurchmesser d₂ ermitteln.

Beim Eindrehen der Schraube in beispielsweise duroplastisches Material werden Materialanteile abgespant und in die Bereiche zwischen den Gewindegängen 4 bis gegen die Mantelfläche des jeweiligen Kernabschnitts 5 verdrängt, um längs derselben in Richtung der jeweils benachbarten Gewindeflanke 7 zu fließen und sich in deren Bereich anzusammeln. Auf diese Weise werden die Materialspäne vom Bereich der die Vorspannung der Schraube aufnehmenden Gewindeflanken 6 ferngehalten, so daß deren für die Größe der Vorspannungskräfte maßgebende Tragtiefe nicht reduziert wird. Dementsprechend kann die Schraube, sobald ihr Schraubenkopf 1 am Material anliegt, durch weitere Drehung mit den dieser Tragtiefe entsprechenden Kräften vorgespannt werden. Durch das Fließen der verdrängten Materialspäne in lediglich eine Richtung ist ein geringes Einschraubmoment erforderlich.

## Patentansprüche

1. Selbstfurchende Schraube, insbesondere für Duroplaste, Druckgußmaterialien u. dgl., mit einem großen Verhältnis zwischen Außendurchmesser (D) und dem größten Kerndurchmesser (d₁), einem Flankenwinkel (β) der Gewindeflanken (6,7) kleiner als 48° sowie einem großen Verhältnis zwischen Außendurchmesser (D) und achsialem Abstand (h) der Gewindegänge (4), wobei zwischen den Gewindegängen (4) kreisrunde, nichtzylindrische Kernabschnitte (5) angeordnet sind und die dem Schraubenkopf(1) abgewandten Gewindeflanken (7) im wesentlichen senkrecht zur Schraubenlängsachse (8) verlaufen,
dadurch gekennzeichnet,
daß sich jeder Kernabschnitt (5) ausgehend von der Fußlinie (9) der einen benachbarten Gewindeflanke (6) bis zur Fußlinie (10) der jeweils anderen benachbarten Gewindeflanke (7) über seine Gesamtlänge (1) in Richtung Schraubenkopf (1) verjüngt.

2. Selbstfurchende Schraube nach Anspruch 1,
dadurch gekennzeichnet,
daß sich jeder Kernabschnitt (5) mit kontinuierlichem Verlauf in Richtung Schraubenkopf (1) verjüngt.

3. Selbstfurchende Schraube nach Anspruch 2,
dadurch gekennzeichnet,
daß jeder Kernabschnitt (5) konisch ausgebildet ist.

4. Selbstfurchende Schraube nach Anspruch 3,
dadurch gekennzeichnet,
daß der Neigungswinkel (γ) zwischen einer Mantellinie des Kernabschnitts (5) und der Schraubenlängsachse (8) im Bereich von etwa 5° bis etwa 15°, vorzugsweise bei etwa 10°, liegt.

5. Selbstfurchende Schraube nach wenigstens einem vorhergehenden Anspruch ,
gekennzeichnet durch ein eingängiges Gewinde.

6. Selbstfurchende Schraube nach wenigstens einem vorhergehenden Anspruch,
gekennzeichnet, durch ein Verhältnis zwischen dem Gewinde-Außendurchmesser (D) und dem größten Kerndurchmesser (d₁) von größer als 1,15, vorzugsweise etwa 1,3.

7. Selbstfurchende Schraube nach wenigstens einem vorhergehenden Anspruch,
gekennzeichnet durch ein Verhältnis zwischen dem Gewinde-Außendurchmesser (D) und dem axialen Abstand (h) der Gewindegänge (4) von größer als 2,5.

8. Selbstfurchende Schraube nach Anspruch 1, dadurch gekennzeichnet, daß die Gewindeflanken (6,7) einen Flankenwinkel (β) von etwa 30° einschließen.

## Claims

1. Self-tapping screw, in particular for thermosetting plastics, die cast materials and the like, having a large ratio between outer diameter (D) and the largest core diameter (d₁), a flank angle (β) of the thread flanks (6, 7) smaller than 48° and a large ratio between outer diameter (D) and the axial spacing (h) of the thread turns (4), whereby between the thread turns (4) circular, non-cylindrical core sections (5) are arranged and the thread flanks (7) facing away from the screw head (1) extend substantially perpendicularly to the longitudinal screw axis (8),
characterized in that,
each core section (5), starting from the base line (9) of one neighbouring thread flank (6), tapers in the direction of the screw head (1) over its entire length (l) up to the base line (10) of the respective other neighbouring thread flank (7).

2. Self-tapping screw according to claim 1,
characterized in that,
that each core section (5) tapers continuously in the direction of the screw head (1).

3. Self-tapping screw according to claim 2,
characterized in that,
each core section (5) is conical.

4. Self-tapping screw according to claim 3,
characterized in that,
the angle of inclination (γ) between a generator of the core section (5) and the longitudinal screw axis (8) is in the range from approximately 5° to approximately 15°, preferably about 10°.

5. Self-tapping screw according to any preceding claim,
characterized in by a single thread.

6. Self-tapping screw according to any preceding claim,
characterized by a ratio between the thread outer diameter (D) and the largest core diameter (d₁) of greater than 1.15, preferably at about 1.3.

7. Self-tapping screw according to any preceding claim,
characterized by a ratio between the thread outer diameter (D) and the axial spacing (h) of the thread turns (4) of greater than 2.5.

8. Self-tapping screw according to claim 1,
characterized in that,
the thread flanks (6, 7) enclose a flank angle (β) of about 30°.

## Revendications

1. Vis autotaraudeuse, en particulier pour matières thermodurcissables, matières moulées sous pression ou similaires, avec un grand rapport entre le diamètre extérieur (D) et le diamètre de noyau maximal (d₁), un angle de flanc (β) des flancs de filetage (6, 7) inférieur à 48° ainsi qu'un grand rapport entre le diamètre extérieur (D) et la distance axiale (h) des filets (4), des portions de noyau (5) non cylindriques, circulaires étant placées entre les filets (4) et les flancs de filetage (7), tournés à l'opposé de la tête de vis (1) s'étendant sensiblement perpendiculairement à l'axe longitudinal (8) de la vis, caractérisée en ce que chaque portion de noyau (5), partant de la ligne de pied (9) d'un flanc de filetage (6) voisin se rétrécit jusqu'à la ligne de pied (10) de l'autre flanc de filetage (7) voisin, sur toute sa longueur (1), en direction de la tête de vis (1).

2. Vis autotaraudeuse selon la revendication 1, caractérisée en ce que chaque portion de noyau (5) se rétrécit avec un parcours continu en direction de la tête de vis (1).

3. Vis autotaraudeuse selon la revendication 2, caractérisée en ce que chaque portion de noyau (5) est conique.

4. Vis autotaraudeuse selon la revendication 3, caractérisée en ce que l'angle d'inclinaison (γ) entre une génératrice de la portion de noyau (5) et l'axe longitudinal (8) de la vis se situe entre 5° environ et 15° environ, de préférence aux alentours de 10° environ.

5. Vis autotaraudeuse selon l'une au moins des revendications précédentes, caractérisée par un filetage à un filet unique.

6. Vis autotaraudeuse selon l'une au moins des revendications précédentes, caractérisée par un rapport entre le diamètre extérieur de filetage (D) et le diamètre de noyau maximal (d₁) supérieur à 1,15, de préférence environ égal à 1,3.

7. Vis autotaraudeuse selon l'une au moins des revendications précédentes, caractérisée par un rapport entre le diamètre extérieur du filetage (D) et la distance axiale (h) des filets (4), supérieur à 2,5.

8. Vis autotaraudeuse selon la revendication 1, caractérisée en ce que les flancs de filetage (6, 7) enferment un angle de flanc (β) d'environ 30°.
